# DEMANDE DE BREVET EUROPEEN

(11) **EP 3 582 385 A1**
(43) Date de publication de la demande: **18.12.2019**
(21) Numéro de dépôt: 19180096.0
(22) Date de dépôt: 13.06.2019
(51) Int. Cl.: H02M 3/338, H02M 1/00

(54) **CONVERTISSEUR DC/DC**

(30) Priorité: 15.06.2018 FR 1855258
(71) Demandeur: Commissariat à l'Energie Atomique et aux Energies Alternatives, 75015 Paris (FR)
(72) Inventeur: BERGOGNE, Dominique, 38054 GRENOBLE CEDEX 09 (FR)
(74) Mandataire: Cabinet Beaumont

(57) **Abrégé**

La présente description concerne un convertisseur continu-continu comportant : un transformateur (2) dont un enroulement primaire (21) fait partie d'un circuit auto-oscillant (6) ; un circuit commandable d'application d'une première tension continue (Vin) aux bornes du circuit auto-oscillant ; et un circuit (8) de détection d'énergie au secondaire (22) du transformateur.

## Description

### Domaine

La présente description concerne de façon générale les circuits électroniques et, plus particulièrement, les convertisseurs continu-continu (DC/DC). La présente description concerne plus précisément la transmission de signaux de commandes par un tel convertisseur DC/DC.

### État de l'art antérieur

Les convertisseurs continu-continu sont très largement utilisés dans des applications de puissance, c'est-à-dire pour transmettre de l'énergie, typiquement depuis une source d'énergie à une charge. De tels convertisseurs procurent généralement une isolation galvanique entre l'amont et l'aval du convertisseur.

On retrouve des convertisseurs continu-continu dans de nombreuses applications de transfert et de conversion d'énergie, que la conversion finale soit AC/AC, AC/DC, DC/AC ou DC/DC. A titre d'exemple, on trouve des convertisseurs continu-continu dans des alimentations à découpage, des onduleurs de tension, des régulateurs de tension, etc.

La transmission de signaux de commande ou basse puissance entre l'amont et l'aval d'un convertisseur continu-continu requiert, le plus souvent, soit un deuxième transformateur, soit des éléments d'isolation de type optocoupleur.

Le document US 2006/0120115 décrit un système de conversion de puissance comportant un circuit oscillant, un circuit de commande d'oscillateur pour commander le circuit oscillant LC, un circuit redresseur couplé au circuit oscillant LC pour fournir une sortie DC, et un circuit de commutation pour contrôler le rapport cyclique du circuit de commande d'oscillateur afin de moduler la puissance dans le circuit oscillateur et le circuit redresseur.

Le document US 2017/0358993 décrit un convertisseur DC-DC à isolation galvanique avec transmission de données bidirectionnelle.

Le document JP 2009 044837 décrit un dispositif d'alimentation à découpage pour transmettre des signaux en utilisant un transformateur pour transmettre l'énergie.

### Résumé

Il serait souhaitable de pouvoir transmettre des signaux basse puissance ou de commande à travers un convertisseur continu-continu sans nuire à la conversion d'énergie.

Un mode de réalisation pallie tout ou partie des inconvénients des convertisseurs continu-continu usuels.

Un mode de réalisation prévoit un convertisseur continu-continu à transmission d'énergie et de signaux de commande.

Un mode de réalisation prévoit un convertisseur continu-continu comportant :
un transformateur comportant un primaire et un secondaire, un enroulement du primaire faisant partie d'un circuit auto-oscillant d'alimentation du transformateur ;
côté primaire, un circuit commandable destiné à recevoir un premier signal numérique à transmettre au secondaire et comportant un dispositif de modulation agissant sur ledit circuit auto-oscillant d'alimentation du transformateur côté primaire ; et
côté secondaire, en parallèle à un circuit de redressement, un circuit de détection et de démodulation, pour récupérer ledit premier signal,
ledit premier signal comportant des premières périodes dans un premier état et des deuxièmes périodes dans un deuxième état, ledit dispositif de modulation fournissant un deuxième signal de commande d'un interrupteur d'application, quand ledit deuxième signal est dans ledit premier état, d'une première tension continue aux bornes dudit circuit auto-oscillant, ledit deuxième signal comportant des premiers trains d'impulsions au deuxième état pendant lesdites premières périodes du premier signal et ledit circuit de détection et de démodulation pour récupérer ledit premier signal comprenant un dispositif de reconstitution desdits premiers trains d'impulsions dudit deuxième signal à partir d'interruptions de l'énergie récupérée au secondaire, pour en déduire ledit premier signal.

Selon un mode de réalisation, les premières et deuxièmes périodes du premier signal forment un deuxième train d'impulsions de fréquence inférieure à la fréquence des impulsions contenues dans les premiers trains d'impulsions du deuxième signal.

Selon un mode de réalisation, la fréquence des impulsions du premier signal est supérieure, de préférence dans un rapport d'au moins 10, à la fréquence des impulsions contenues dans les premiers trains d'impulsions du deuxième signal.

Selon un mode de réalisation, la fréquence de résonance du circuit auto-oscillant est supérieure, de préférence dans un rapport d'au moins 10, à la fréquence des impulsions contenues dans les trains d'impulsions du deuxième signal.

Selon un mode de réalisation, le circuit de détection détecte la présence ou l'absence de puissance transmise au secondaire du transformateur.

Selon un mode de réalisation, la présence ou l'absence de puissance transmise est détectée par la présence ou l'absence de courant via une chute de tension dans une résistance.

Selon un mode de réalisation, le circuit de détection détecte l'absence de courant en sortie d'un pont redresseur dont des bornes d'entrée sont reliées aux bornes d'un enroulement secondaire du transformateur.

Un mode de réalisation prévoit un procédé de transmission d'un signal numérique par un convertisseur continu-continu à transformateur, dans lequel :
côté primaire du transformateur :
   un premier signal numérique, à transmettre au secondaire et comportant des premières périodes dans un premier état et des deuxièmes périodes dans un deuxième état, est converti en un deuxième signal comportant, pendant les premières périodes du premier signal, des premiers trains d'impulsions du premier état vers le deuxième état ; et
   une première tension continue est appliquée aux bornes d'un circuit auto-oscillant quand le deuxième signal est dans le premier état ; et
côté secondaire :
   les premiers trains d'impulsions du deuxième signal sont reconstitués à partir d'interruptions de l'énergie récupérée au secondaire ; et
   le premier signal en est déduit.

Selon un mode de réalisation, la période des impulsions des premiers trains d'impulsions est inférieure, de préférence dans un rapport d'au moins 10, à la période d'auto-oscillation du circuit auto-oscillant.

Selon un mode de réalisation, chaque impulsion représente moins de cinq, de préférence une ou deux, périodes d'auto-oscillation du circuit auto-oscillant.

Selon un mode de réalisation, les premières et deuxièmes périodes du premier signal forment un deuxième train d'impulsions de fréquence inférieure à la fréquence des impulsions contenues dans les premiers trains d'impulsions du deuxième signal.

Selon un mode de réalisation, le procédé est adapté au convertisseur décrit.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une représentation très schématique d'un exemple de système incluant un convertisseur continu-continu ;
la figure 2 représente, de façon très schématique, un mode de réalisation d'un convertisseur continu-continu ;
les figures 3A, 3B, 3C, 3D, 3E, 3F et 3G illustrent, par des chronogrammes, le fonctionnement du convertisseur de la figure 2 ; et
la figure 4 représente, de façon très schématique, un mode de réalisation plus détaillé d'un convertisseur continu-continu ; et
la figure 5 représente, de façon très schématique, un mode de réalisation simplifié d'un système de transmission d'un signal numérique à travers un transformateur.

### Description détaillée

De mêmes éléments ont été désignés par de mêmes références aux différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, la destination des signaux de puissance ou du signal de commande transférés par le convertisseur décrit n'a pas été détaillée, les modes de réalisation étant compatibles avec les destinations usuelles de ces signaux qui dépendent de l'application. Les modes de réalisation décrits sont en particulier compatibles avec les applications usuelles de convertisseurs continu-continu. De plus, la génération des signaux de commande ou basse puissance à transmettre par le biais du convertisseur continu-continu n'a pas non plus été détaillée, les modes de réalisation décrits étant là encore compatibles avec les techniques usuelles de génération de tels signaux qui dépendent de l'application.

Sauf précision contraire, lorsque l'on fait référence à deux éléments connectés entre eux, cela signifie directement connectés sans élément intermédiaire autre que des conducteurs, et lorsque l'on fait référence à deux éléments reliés ou couplés entre eux, cela signifie que ces deux éléments peuvent être directement reliés (connectés) ou être reliés par l'intermédiaire d'un ou plusieurs autres éléments.

Dans la description qui suit, lorsque l'on fait référence aux termes "sensiblement", "approximativement", "environ" et "de l'ordre de", cela signifie à 10 % près, de préférence à 5 % près.

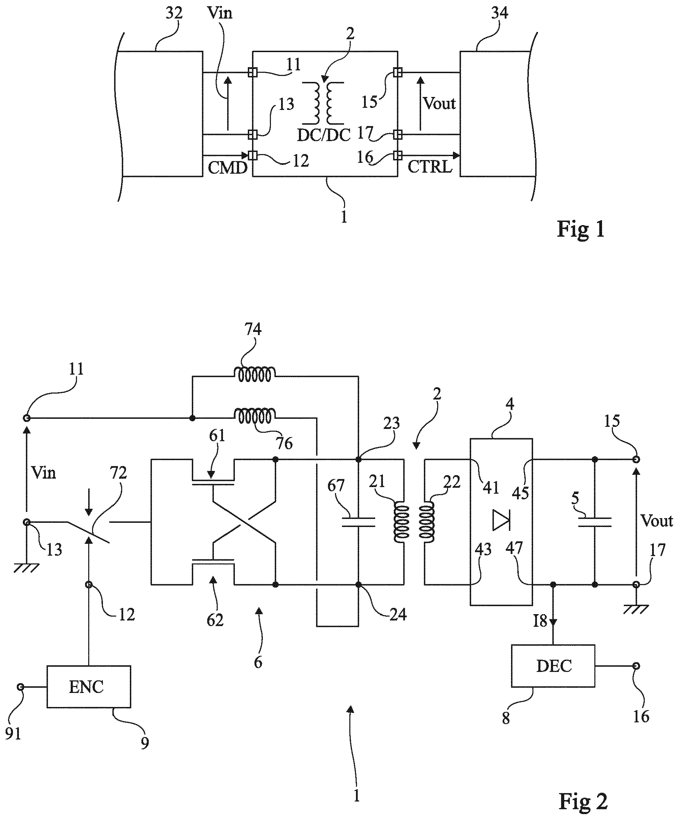

La figure 1 est une représentation très schématique d'un exemple de système incluant un convertisseur continu-continu.

Dans les modes de réalisation décrits, un convertisseur continu-continu 1 (DC/DC) est basé sur un transformateur inductif 2 d'une tension continue d'entrée Vin, appliquée entre deux bornes 11 et 13 d'entrée, en une tension continue de sortie Vout, fournie entre deux bornes 15 et 17 de sortie.

La tension Vin d'entrée provient d'une source d'énergie 32. La source d'énergie 32 peut être directement un élément de production ou de stockage d'une tension continue, ou être constituée d'un circuit de conversion d'énergie amont (alimentation à découpage, régulateur linéaire, convertisseur AC/DC, DC/DC, etc.). La tension Vout de sortie est fournie à une charge 34, constituée par exemple d'un autre étage de conversion ou de régulation d'énergie (alimentation à découpage, régulateur linéaire, convertisseur DC/AC, DC/DC, etc.), ou d'un circuit de commande de grille (gate driver). La source d'énergie 32 fournit un signal de puissance (haute puissance) par opposition à des signaux de commande (basse puissance) qui n'ont pas vocation à transmettre de l'énergie susceptible d'alimenter des circuits en aval, mais à transmettre des consignes, informations, ou données.

Selon les modes de réalisation décrits, des signaux de commande transitent également par le convertisseur 1. Ainsi, un signal CMD fourni par les circuits 32 amont du convertisseur sur une borne 12 est converti, avec isolation galvanique, en un signal CTRL fourni sur une borne 16 à destination des circuits aval 34.

La figure 2 représente, de façon très schématique, un mode de réalisation d'un convertisseur continu-continu.

Selon ce mode de réalisation, le convertisseur 1 comporte un transformateur 2 comportant un enroulement primaire 21 et un enroulement secondaire 22.

L'enroulement primaire 21 est relié, par l'intermédiaire d'un circuit auto-oscillant 6, aux bornes d'entrée 11 et 13 d'application de la tension continue Vin, la borne 13 constituant, par exemple et arbitrairement, la masse côté primaire.

Le circuit 6 est basé sur deux interrupteurs 61 et 62, par exemple des transistors MOS, reliant les extrémités respectives 23 et 24 de l'enroulement 21 entre elles et dont les grilles respectives sont reliées aux bornes 24 et 23. Ainsi, la grille du transistor 61 est connectée au drain du transistor 62 et la grille du transistor 62 est connectée au drain du transistor 61. Les sources des transistors 61 et 62 sont interconnectées et, dans l'exemple représenté, sont reliées à la borne 13 par un interrupteur 72 de modulation. Le rôle de cet interrupteur 72 est d'appliquer le signal de commande CMD à transmettre au secondaire. La borne de commande de l'interrupteur 72 (grille dans le cas d'un transistor MOS) est reliée à la borne 12. Par ailleurs, les bornes 23 et 24 sont respectivement reliées, par l'intermédiaire d'éléments inductifs 74 et 76, à la borne 11 et sont couplées l'une à l'autre par un élément capacitif 67. On peut considérer que l'interrupteur 72 et les éléments inductifs 74 et 76 constituent un circuit d'application de la tension Vin aux bornes du circuit auto-oscillant 6. L'interrupteur 72 reçoit le signal CMD d'un dispositif d'encodage ou de modulation 9 (ENC) recevant, sur une borne 91, un signal à transmettre au secondaire. Le dispositif 9 fait le cas échéant partie du circuit 32.

L'enroulement secondaire du transformateur 2 est relié à des bornes 41 et 43 d'entrée alternative d'un circuit de redressement 4. Les bornes 45 et 47 de sortie redressée du pont 4 sont reliées aux bornes 15 et 17 de fourniture de la tension Vout, la borne 17 définissant, par exemple et arbitrairement, la masse côté secondaire (différente de, et non connectée à, la masse côté primaire en raison du besoin d'isolation galvanique). Un élément capacitif 5 couple, de préférence connecte, les bornes 45 et 47. Par ailleurs, au moins une des bornes 45 et 47 de sortie du pont 4 (dans l'exemple représenté, la borne 47) est reliée en entrée d'un circuit 8 de décodage (DEC) du signal transmis (courant I) dont une sortie est reliée à la borne 16.

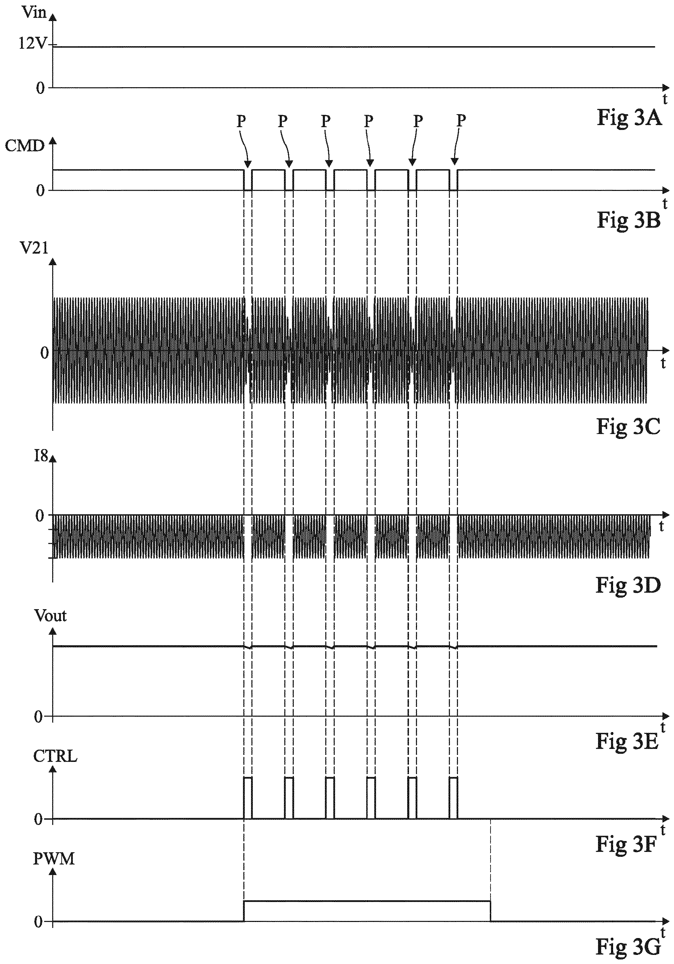

Les figures 3A, 3B, 3C, 3D, 3E, 3F et 3G illustrent, par des chronogrammes, le fonctionnement du convertisseur de la figure 2.

La figure 3A représente un exemple d'allure de la tension continue Vin en entrée du convertisseur. La figure 3B illustre un exemple arbitraire de signal CMD de commande en fermeture de l'interrupteur 72 de modulation. La figure 3C illustre l'allure correspondante de la tension V21 aux bornes de l'élément inductif 21. La figure 3D illustre l'allure correspondante du courant I8 circulant dans le pont 4, détecté par le détecteur 8. La figure 3E illustre l'allure correspondante de la tension Vout de sortie du convertisseur. La figure 3F illustre l'allure correspondante du signal CTRL fourni par le détecteur 8. La figure 3G illustre un exemple arbitraire de codage du signal de commande CMD ou CTRL en un signal PWM.

Typiquement, pour transmettre une information numérique ou un signal numérique, par exemple le signal PWM, du primaire vers le secondaire, le signal à transmettre, ou premier signal PWN, est converti, par le dispositif 9, en signal CMD, ou deuxième signal, de commande en fermeture de l'interrupteur 72. On peut considérer que le premier signal numérique PWM à transmettre au secondaire 22 comporte des premières périodes (créneau à l'état haut en figure 3G) dans un premier état (1) et des deuxièmes périodes (état bas en figure 3G) dans un deuxième état (0). Le deuxième signal CMD, généré à partir du premier signal, est au repos dans un des deux états, par exemple le premier état (1) et comporte, pendant les premières périodes du premier signal PWM, des premiers trains d'impulsions (P, figure 3B) du premier état (1) vers le deuxième état (0).

L'application du signal CMD pour commander l'alimentation du circuit oscillant se traduit par des interruptions de cette alimentation pendant les impulsions P.

Côté secondaire, on assiste à des interruptions dans la récupération d'énergie qui reproduisent les impulsions P. Le courant I8 (figure 3D) est donc représentatif du signal CMD. On peut alors, au secondaire, reconstituer l'allure du signal CMD sous la forme du signal CTRL (figure 3F), puis en déduire ou reconstruire (par démodulation, décodage, etc.) le premier signal PWM.

Selon les modes de réalisation décrits, la fréquence de résonance du circuit LC (enroulement 21, condensateur 67) du circuit auto-oscillant 6 est choisie pour être nettement supérieure (dans un rapport d'au moins 10) à la fréquence maximale d'impulsions de modulation du signal CMD. De préférence, dans une application où le signal CMD constitue une consigne de modulation de largeur d'impulsion (PWM) d'une alimentation à découpage alimentée par le convertisseur 1, la fréquence de résonance du circuit LC (21-67) est très nettement (dans un rapport d'au moins 100) supérieure à la fréquence maximale des impulsions de modulation du signal CMD. Avec une telle sélection du rapport entre les différentes fréquences, on s'assure que la tension Vout fournie ne soit pas impactée de façon notable par la modulation par le signal de commande.

Dans l'exemple des figures 3A à 3G, on suppose la présence de six impulsions P de fermeture de l'interrupteur 72 (figure 3B). Chacune de ces fermetures s'accompagne d'une mise en haute impédance du montage des transistors 61 et 62. La borne 13 étant déconnectée, aucune énergie n'est fournie par la tension Vin. Le circuit oscillant constitué de l'enroulement 21 et du condensateur 67 continue néanmoins d'osciller (oscillations libres) mais sans transmettre d'énergie au secondaire (en considérant que la durée d'oscillations libres n'est pas suffisante, eu égard à la consommation d'énergie par la charge 34, pour que la tension Vout chute suffisamment et rende le pont 4 passant). Ainsi, grâce à l'utilisation d'un circuit auto-oscillant et au choix de sa fréquence de résonance, la tension V21 (figure 3C) ne s'annule pas pendant une impulsion P. Il faut pour cela que la largeur d'une impulsion P ne représente que quelques périodes (moins de cinq et, de préférence, une ou deux) de la fréquence de résonance du circuit 6. Dans le cas contraire, le système fonctionne quand même mais, en fonction de la consommation de la charge, risque de ne plus respecter de maintenir la tension de sortie Vout.

Comme la tension Vin est déconnectée pendant les impulsions P d'ouverture de l'interrupteur 72, ces impulsions se traduisent, au secondaire du transformateur 2, par une interruption du courant I8 (figure 3D) dans les diodes du pont redresseur 4. Côté tension de sortie Vout (figure 3E), la diminution de l'amplitude reste négligeable (si l'impulsion P est suffisamment courte devant la consommation d'énergie par la charge 34) et on peut donc considérer que la tension Vout n'est pas impactée par le signal de commande. La détection au secondaire, par le décodeur 8, correspond à détecter les périodes pendant lesquelles les diodes du pont 4 ne sont pas traversées par un courant (figure 3F) et à mettre en forme ce signal V16 pour le rendre exploitable par les circuits aval.

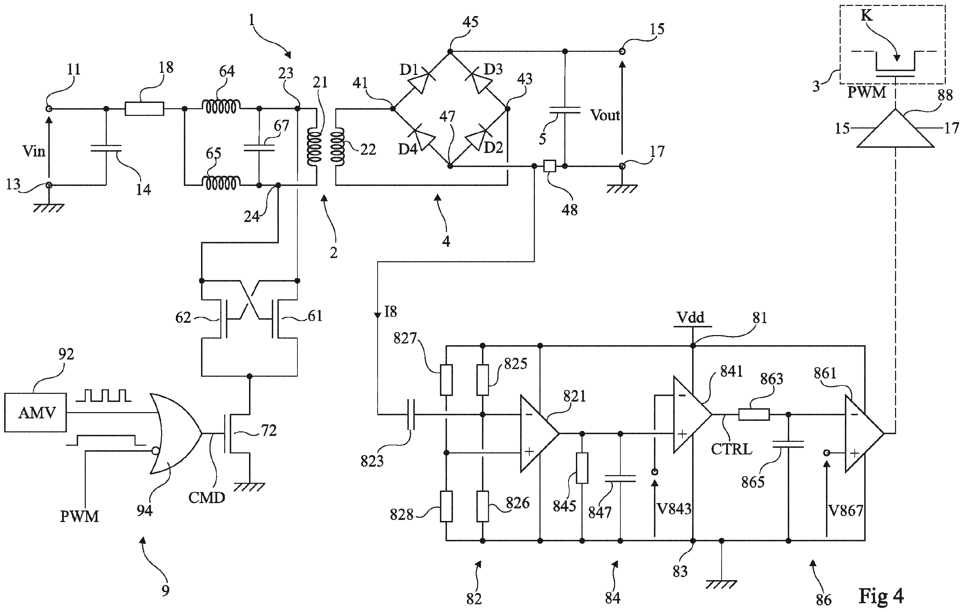

Dans l'exemple arbitraire des figures 3A à 3G, on suppose le cas d'une tension Vin de l'ordre de 12 volts. On se place dans le cas d'un signal CMD destiné à commander la largeur d'impulsions d'un signal de modulation de largeur d'impulsions PWM d'un interrupteur K (figure 4) faisant partie d'un autre circuit de puissance non détaillé. Dans l'exemple des figures 3A à 3G, on suppose que le nombre d'impulsions du signal CMD (ou CTRL) conditionne la largeur de l'impulsion du signal PWM à l'état haut.

Le fonctionnement illustré par les figures 3A à 3G correspond à un fonctionnement en régime établi, c'est-à-dire une fois que la tension Vout a atteint sa valeur nominale. Dans une phase de démarrage ou transitoire, la tension Vout croît progressivement. En cas de modulation de la tension V21 par le signal CMD, la chute de la tension Vout lors d'une impulsion de fermeture de l'interrupteur 72 risque de ne pas être négligeable. Toutefois, cela ne dure que le temps du régime transitoire d'établissement de la valeur nominale de la tension de sortie Vout.

En tirant profit du fait que l'on est en régime établi au secondaire, on autorise une disparition de l'alimentation (du courant I8 au secondaire) sans que cela n'impacte de façon notable la tension de sortie. De plus, grâce au circuit auto-oscillant au primaire, le redémarrage est immédiat, c'est-à-dire qu'il n'y a pas de phénomène transitoire de rétablissement de la tension V21 une fois que l'interrupteur 72 est refermé. Cet avantage est obtenu grâce au fait que la durée de blocage de l'interrupteur 72 est de l'ordre d'une ou deux périodes d'oscillation naturelle du circuit auto-oscillant 6.

Ainsi, par rapport à une solution dans laquelle on module la tension côté primaire en tout ou rien, il n'y a pas de temps mort lié à la transmission de la commande.

La figure 4 représente, de façon très schématique, un mode de réalisation plus détaillé d'un convertisseur 1.

Selon ce mode de réalisation, on suppose que le convertisseur 1 fournit l'énergie à un circuit 88 de commande de grille (gate driver) d'un interrupteur K (par exemple, un transistor MOS de puissance) d'un circuit de puissance 3 (symbolisé par un pointillé). Seul ce transistor K a été illustré en figure 4.

La figure 4 détaille, plus particulièrement, un exemple de circuit 9 de génération du signal CMD à partir du signal PWM représentatif des périodes de fermeture souhaitées pour l'interrupteur K, et de circuit de décodage 8 permettant de restituer ce signal PWM. Les circuits 8 et 9 peuvent faire partie du convertisseur 1 comme en figure 4 ou être respectivement inclus côté source 32 et côté charge 34 comme en figure 1.

Côté signaux de puissance, la figure 4 illustre en entrée (entre les bornes 11 et 13) un condensateur 14 de filtrage (passe-bas) et une résistance 18 de protection en amont des éléments inductifs 64 et 65. Le pont de redressement 4 est, par exemple, un pont double alternance comportant quatre diodes. Une diode D1 connecte les bornes 41 et 45 (anode côté borne 41). Une diode D2 connecte les bornes 47 et 43 (anode côté borne 47). Une diode D3 connecte les bornes 43 et 45 (anode côté borne 43). Une diode D4 connecte les bornes 47 et 41 (anode côté borne 47).

Le circuit 9 comporte, dans cet exemple, un circuit multivibrateur astable 92 (AMV), produisant un signal périodique définissant la fréquence des impulsions P (figure 3B). La réalisation d'un multivibrateur astable est en elle-même usuelle. En variante, le multivibrateur est remplacé par un oscillateur fournissant un signal périodique à une fréquence supérieure (dans un rapport d'au moins 10) à la fréquence du signal PWM à transmettre au secondaire. Le signal PWM est combiné (porte 94) à la sortie du multivibrateur 92 pour produire le signal CMD de commande en ouverture de l'interrupteur 72. Dans l'exemple de la figure 4, l'interrupteur 72 est constitué d'un transistor MOS et le signal CMD est appliqué sur la grille de ce transistor. Par exemple, le transistor 72 est ouvert quand le signal est à l'état bas. La porte 94 est alors, par exemple, une porte de type OU combinant le signal fourni par le multivibrateur 92 à l'inverse du signal PWM (symbolisé par une entrée inverseuse de la porte 94).

Le circuit 8 de décodage du courant prélevé sur la borne 47 pour reconstituer le signal PWM comporte, en fonctionnement, un détecteur de courant 82, un démodulateur d'amplitude 84 et un circuit 86 de mise en forme.

Le circuit 82 est basé sur un comparateur 821 dont une entrée (non inverseuse pour un courant prélevé sur la borne 47) reçoit une tension de référence et dont une entrée inverseuse est reliée, par un condensateur de découplage 823, à la borne 47. Une résistance 48 de détection de courant est intercalée entre le point de prélèvement du courant I8 côté borne 47 et l'électrode du condensateur 5 côté borne 17. Le condensateur 823 ne laisse donc passer que les fronts présents sur le courant I8, donc les fronts des impulsions P (figure 3B). Les entrées du comparateur 821 sont par ailleurs chacune reliées au point milieu d'un pont diviseur résistif, respectivement R825-R826 et R827-R828. Le rôle de ces ponts diviseurs est d'appliquer, sur les entrées du comparateur 821, des tensions de mode commun très proches, de préférence correspondant approximativement à la moitié de la tension Vdd d'alimentation du comparateur. Les associations en série des résistances 825-826 et 827-828 sont donc reliées, de préférence connectées, à des bornes 81 et 83 de fourniture de cette tension Vdd. La tension Vdd est, par exemple, extraite de la tension Vout ou, plus généralement, fournie par l'application en aval du convertisseur 1 et alimente le circuit 8. En pratique, on prévoit trois des quatre résistances identiques et la quatrième légèrement différente (de 1/1000 à 1/100) afin d'éviter une instabilité en sortie du comparateur 821. En régime établi du convertisseur, lorsqu'un courant stable est présent en sortie du pont 4, la sortie du comparateur est dans un premier état (arbitrairement choisi bas). A chaque impulsion P, la sortie du comparateur 821 bascule et produit une impulsion.

Le circuit 84 (fonctionnellement de démodulation d'amplitude) est basé sur un comparateur 841 dont une entrée (par exemple inverseuse) reçoit une tension de référence V843 (inférieure à la tension Vdd) et dont l'autre entrée (par exemple non inverseuse) est reliée à la sortie du comparateur 821. Cette entrée non inverseuse est par ailleurs reliée à la masse (borne 83) par une cellule résistive et capacitive parallèle (résistance 845 et condensateur 847 en parallèle entre la sortie du comparateur 821 et la borne 83). Le circuit 84 permet de filtrer la sortie du circuit 82 et de fournir le signal CTRL à l'état haut pendant les impulsions P.

Le circuit 86 de mise en forme comporte une cellule de filtrage passe bas constituée d'une résistance 863 entre la sortie du circuit 84 (sortie du comparateur 841) et une entrée (par exemple inverseuse) d'un comparateur 861, un condensateur 865 reliant cette entrée à la masse. L'autre entrée (par exemple non inverseuse) du comparateur 861 reçoit une tension de référence V867 fixant le seuil en tension de basculement de la sortie du comparateur 861. La constante de temps de la cellule RC (863-865) et la tension V867 sont choisies pour que la sortie du comparateur 861 reste stable (dans cet exemple, à l'état haut) pendant approximativement une période du signal CMD, c'est-à-dire une période du multivibrateur astable. Cette durée doit cependant être inférieure à deux périodes du signal CMD, faute de quoi la largeur des impulsions du signal PWM est restituée avec une marge d'erreur d'une période du signal CMD. La sortie du comparateur 861 fournit le signal CTRL qui restitue le signal PWM. En pratique, le signal PWM est ensuite appliqué à une grille de transistor constituant l'interrupteur K par l'intermédiaire du circuit ou amplificateur (driver) 88, alimenté par la tension Vout (entre les bornes 15 et 17). L'amplificateur 88 reçoit le signal fourni par le comparateur 861 et sa sortie est reliée à la grille du transistor K. Ainsi, dans cet exemple, l'énergie transférée du primaire au secondaire du transformateur sert à alimenter le circuit de commande (driver) de l'interrupteur de puissance K, et le signal numérique PWM transmis du primaire au secondaire conditionne les périodes de fermeture de cet interrupteur de puissance.

D'autres réalisations du circuit 8 sont possibles pourvu de respecter la fonctionnalité de décoder les impulsions en sortie du pont redresseur pour reconstituer le signal d'origine. De plus, les niveaux haut et bas pris pour les différents signaux sont arbitraires et l'inverse peut être prévu en fonction de l'application.

Un avantage des modes de réalisation décrits est qu'ils sont compatibles avec les circuits usuels de génération de signaux PWM, notamment pour alimentation à découpage. En effet, le convertisseur décrit peut recevoir, en entrée 12, un signal PWM usuel et restituer ce signal en aval de façon transparente pour le circuit amont ayant produit ce signal PWM.

A titre d'exemple particulier de réalisation pour un convertisseur DC/DC dont la tension de sortie est destinée à constituer la tension d'entrée d'un convertisseur à découpage et dont le signal PWM est destiné à commander un interrupteur, on peut dimensionner le convertisseur pour les caractéristiques suivantes :
- fréquence de résonance du circuit LC (21-67) de l'ordre de la dizaine à quelques dizaines de MHz ;
- fréquence du signal modulant CMD de l'ordre de quelques MHz, avec des durées d'impulsions P d'une ou deux périodes ; et
- fréquence du signal PWM dont le rapport cyclique est modifié en fonction des besoins de la charge alimentée par l'alimentation à découpage, de l'ordre du Hz (voire 0 Hz) à quelques centaines de kHz.

Un avantage des modes de réalisation décrits est qu'ils permettent de véhiculer des signaux de commande à travers une barrière d'isolation galvanique, sans nuire à la transmission d'énergie à travers cette même barrière.

Un autre avantage des modes de réalisation décrits est que l'architecture du convertisseur est particulièrement simple.

Un autre avantage des modes de réalisation décrits est qu'ils sont compatibles avec l'utilisation d'un transformateur sans noyau magnétique.

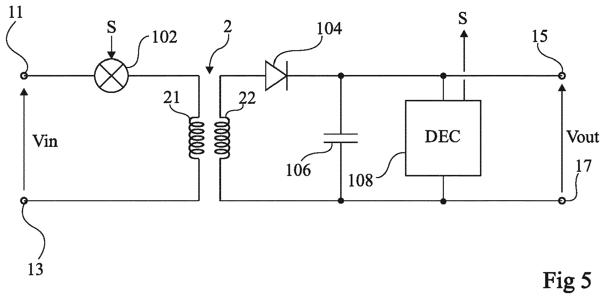

La figure 5 représente, de façon très schématique, un mode de réalisation simplifié d'un système de transmission d'un signal numérique à travers un transformateur.

Selon ce mode de réalisation, une tension continue Vin, destinée à être appliquée aux bornes de l'enroulement primaire 21 du transformateur 2, est mélangée (mélangeur 102) à un signal modulant S à transmettre. Côté secondaire du transformateur 2, un élément de redressement 104 (ou un pont) redresse le signal aux bornes de l'enroulement secondaire 22. La sortie de l'élément de redressement 104 est reliée à une borne 15 de fourniture d'une tension d'alimentation Vout de sortie, un condensateur 106 reliant les bornes de sortie 15 et 17. La tension de sortie Vout alimente un circuit 108 (DEC) de détection de périodes d'interruption du transfert d'énergie entre le primaire et le secondaire et restitue une image du signal S. En respectant des conditions appropriées sur la fréquence et la largeur des impulsions du signal numérique S, on récupère l'image de ce signal sans dégrader l'alimentation Vout.

Divers modes de réalisation et variantes ont été décrits. Ces divers modes de réalisation et variantes sont combinables et d'autres variantes apparaitront à l'homme de l'art. Par exemple, bien que la disposition de l'interrupteur 72 côté masse 13 constitue un mode de réalisation préféré pour des questions de référence des signaux de commande, on pourra placer cet interrupteur côté borne 11. Par ailleurs, la détermination des différentes valeurs et le dimensionnement des composants dépendent de l'application et sont à la portée de l'homme du métier à partir des indications fonctionnelles données ci-dessus. En outre, bien que l'on ait fait plus particulièrement référence à la transmission d'un signal basse puissance de type signal de commande PWM, les modes de réalisation décrits se transposent plus généralement à toutes applications de conversion de puissance continu-continu avec transmission de commande dans lesquelles des problèmes similaires se posent.

## Revendications

1. Convertisseur continu-continu comportant :
un transformateur (2) comportant un primaire (21) et un secondaire (22), un enroulement du primaire (21) faisant partie d'un circuit auto-oscillant (6) d'alimentation du transformateur ;
côté primaire (21), un circuit commandable (9, 72) destiné à recevoir un premier signal numérique (PWM) à transmettre au secondaire (22) et comportant un dispositif de modulation agissant sur ledit circuit auto-oscillant d'alimentation du transformateur côté primaire ; et
côté secondaire (22), un circuit (8) de détection et de démodulation pour récupérer ledit premier signal,
ledit premier signal comportant des premières périodes dans un premier état (1) et des deuxièmes périodes dans un deuxième état (0), ledit dispositif de modulation fournissant un deuxième signal (CMD) de commande d'un interrupteur (72) d'application, quand ledit deuxième signal est dans ledit premier état (1), d'une première tension continue (Vin) aux bornes dudit circuit auto-oscillant (6), ledit deuxième signal (CMD) comportant des premiers trains d'impulsions (P) au deuxième état (0) pendant lesdites premières périodes du premier signal (PWM) et ledit circuit de détection et de démodulation pour récupérer ledit premier signal comprenant un dispositif de reconstitution desdits premiers trains d'impulsions (P) dudit deuxième signal (CMD) à partir d'interruptions de l'énergie récupérée au secondaire, pour en déduire ledit premier signal (PWM).

2. Convertisseur selon la revendication 1, dans lequel les premières et deuxièmes périodes du premier signal (PWM) forment un deuxième train d'impulsions de fréquence inférieure à la fréquence des impulsions contenues dans les premiers trains d'impulsions (P) du deuxième signal (CMD).

3. Convertisseur selon la revendication 2, dans lequel la fréquence des impulsions du premier signal (PWM) est supérieure, dans un rapport d'au moins 10, à la fréquence des impulsions contenues dans les premiers trains d'impulsions (P) du deuxième signal (CMD).

4. Convertisseur selon l'une quelconque des revendications 1 à 3, dans lequel la fréquence de résonance du circuit auto-oscillant (6) est supérieure, de préférence dans un rapport d'au moins 10, à la fréquence des impulsions (P) contenues dans les trains d'impulsions du deuxième signal (CMD).

5. Convertisseur selon l'une quelconque des revendications 1 à 4, dans lequel le circuit de détection (8) détecte la présence ou l'absence de puissance transmise (I8) au secondaire du transformateur (2).

6. Convertisseur selon la revendication 5, dans lequel la présence ou l'absence de puissance transmise est détectée par la présence ou l'absence de courant via une chute de tension dans une résistance.

7. Convertisseur selon la revendication 5 ou 6, dans lequel le circuit de détection (8) détecte l'absence de courant (I8) en sortie d'un pont redresseur (4) dont des bornes d'entrée (41, 43) sont reliées aux bornes d'un enroulement secondaire (22) du transformateur (2).

8. Procédé de transmission d'un signal numérique (CMD) par un convertisseur continu-continu (1) à transformateur (2), dans lequel :
côté primaire (21) du transformateur :
un premier signal numérique (PWM), à transmettre au secondaire (22) et comportant des premières périodes dans un premier état (1) et des deuxièmes périodes dans un deuxième état (0), est converti en un deuxième signal (CMD) comportant, pendant les premières périodes du premier signal (PWM), des premiers trains d'impulsions (P) du premier état (1) vers le deuxième état (0) ; et
une première tension continue (Vin) est appliquée aux bornes d'un circuit auto-oscillant (6) quand le deuxième signal (CMD) est dans le premier état (1) ; et
côté secondaire (22) :
les premiers trains d'impulsions (P) du deuxième signal (CMD) sont reconstitués à partir d'interruptions de l'énergie récupérée au secondaire ; et
le premier signal (PWM) en est déduit.

9. Procédé selon la revendication 8, dans lequel la période des impulsions (P) des premiers trains d'impulsions est inférieure, de préférence dans un rapport d'au moins 10, à la période d'auto-oscillation du circuit auto-oscillant (6).

10. Procédé selon la revendication 8 ou 9, dans lequel la durée de chaque impulsion (P) représente moins de cinq, de préférence une ou deux, périodes d'auto-oscillation du circuit auto-oscillant (6).

11. Procédé selon l'une quelconque des revendications 8 à 10, dans lequel les premières et deuxièmes périodes du premier signal (PWM) forment un deuxième train d'impulsions de fréquence inférieure à la fréquence des impulsions contenues dans les premiers trains d'impulsions (P) du deuxième signal (CMD).

12. Procédé selon l'une quelconque des revendications 8 à 11, adapté au convertisseur selon l'une quelconque des revendications 1 à 7.
